# EUROPEAN PATENT SPECIFICATION

(11) **EP 4 530 987 B1**
(45) Date of publication and mention of the grant of the patent: **08.07.2026**
(21) Application number: 24202504.7
(22) Date of filing: 25.09.2024
(51) Int. Cl.: G06T 12/30

(54) **METAL ARTIFACT REDUCTION IN MEDICAL IMAGE PROCESSING**
VERRINGERUNG VON METALLARTEFAKTEN IN DER MEDIZINISCHEN BILDVERARBEITUNG
RÉDUCTION DES ARTEFACTS DE MÉTAL DANS LE TRAITEMENT DES IMAGES MÉDICALES

(30) Priority: 26.09.2023 CN 202311252861
(43) Date of publication of application: 02.04.2025
(73) Proprietor: GE Precision Healthcare LLC, Waukesha, WI 53188 (US)
(72) Inventor: WANG, Xueli, Milwaukee, 53226 (US); LI, Hongyu, Milwaukee, 53226 (US)
(74) Representative: AWA Sweden AB

(56) References cited:
- MEYER ESTHER ET AL: "Normalized metal artifact reduction (NMAR) in computed tomography", MEDICAL PHYSICS, AIP, MELVILLE, NY, US, vol. 37, no. 10, 28 September 2010 (2010-09-28), pages 5482 - 5493, XP012144717, ISSN: 0094-2405, DOI: 10.1118/1.3484090
- YAMAKAWA KEISUKE ET AL: "Metal artifact reduction by direct artifact prediction using deep learning in x-ray CT", PROGRESS IN BIOMEDICAL OPTICS AND IMAGING, SPIE - INTERNATIONAL SOCIETY FOR OPTICAL ENGINEERING, BELLINGHAM, WA, US, vol. 12031, 4 April 2022 (2022-04-04), pages 120312X - 120312X, XP060155900, ISSN: 1605-7422, ISBN: 978-1-5106-0027-0, DOI: 10.1117/12.2611082

## Description

### TECHNICAL FIELD

Embodiments of the present application relate to the technical field of medical devices, and relate in particular to a medical image processing method and apparatus and a medical device.

### BACKGROUND

In the process of computed tomography (CT), a detector is used to acquire data of X-rays passing through a subject to be examined, and then the acquired X-ray data is processed to obtain projection data. The projection data may be used to reconstruct a CT image. Complete projection data can be used to reconstruct an accurate CT image for diagnosis.

In clinical diagnosis using CT, a potential metal implant (e.g., a dental filling, an artificial joint, a spinal implant, or a vascular stent) in the body of the subject to be examined can cause the loss of attenuation coefficients related to human tissues in an X-ray projection process, leading to streak-like or shadow artifacts in a reconstructed image, which can degrade the quality of the reconstructed image. With the widespread popularization and use of metal implants, metal artifact reduction (MAR) has become a highly clinically valuable medical image analysis task based on CT systems.

The article "Normalized metal artifact reduction (NMAR) in computed tomography" by Meyer et al., Medical Physics, 28 September 2010, pages 5482-5493 relates to metal artifacts in clinical computed tomography (CT), and discusses how severe artifacts may degrade the image quality and the diagnostic value if metal prostheses or other metal objects are present in the field of measurement, and proposes a generalized normalization technique for MAR, allowing for efficient reduction of metal artifacts.

### SUMMARY

Provided in embodiments of the present application are a medical image processing method and apparatus and a medical device. The invention is defined by the independent claims.

According to an aspect of the embodiments of the present application, a medical image processing method is provided, comprising:
acquiring raw projection data obtained after a subject to be examined is scanned, and performing reconstruction to obtain a raw medical image;
performing multivalued processing on the raw medical image to obtain a multivalued image;
according to a correspondence between a degree of contribution, relating to a ray absorption amount, of each tissue on a ray path that does not pass through a specific material site in the multivalued image and a raw projection value corresponding to the ray path in the raw projection data, determining a predicted projection value of a path corresponding to the specific material site in the raw projection data, wherein the step of determining a predicted projection value comprises: determining the degree of contribution of each tissue, other than the specific material site, through which second ray paths pass in the multivalued image, wherein the second ray paths are ray paths that pass through the specific material site; and determining, according to the correspondence, a projection value corresponding to the degree of contribution of each tissue, other than the specific material site, on the second ray paths as the predicted projection value; and
obtaining a first medical image according the predicted projection value and the raw projection data, wherein artifacts of the specific material site are reduced in the first medical image.

According to an aspect of the embodiments of the present application, a medical image processing apparatus is provided, comprising:
a first reconstruction unit, the first reconstruction unit configured for acquiring raw projection data obtained after a subject to be examined is scanned, and performing reconstruction to obtain a raw medical image;
a segmentation unit, the segmentation unit configured for performing multivalued processing on the raw medical image to obtain a multivalued image;
a first determination unit, the first determination unit configured for determining, according to a correspondence between a degree of contribution, relating to a ray absorption amount, of each tissue on a ray path that does not pass through a specific material site in the multivalued image and a raw projection value corresponding to the ray path in the raw projection data, a predicted projection value of a path corresponding to the specific material site in the raw projection data, wherein the first determination unit is configured for: determining the degree of contribution of each tissue, other than the specific material site, through which second ray paths pass in the multivalued image, wherein the second ray paths are ray paths that pass through the specific material site, and determining, according to the correspondence, a projection value corresponding to the degree of contribution of each tissue, other than the specific material site, on the second ray paths as the predicted projection value; and
a second reconstruction unit, the second reconstruction unit configured for obtaining a first medical image according to the predicted projection value and the raw projection data, wherein artifacts of the specific material site are reduced in the first medical image.

According to an aspect of the embodiments of the present application, a medical device is provided, the medical device comprising the medical image processing apparatus according to the preceding aspect.

With reference to the following description and drawings, specific implementations of the embodiments of the present application are disclosed in detail, and the means by which the principles of the embodiments of the present application can be employed are illustrated.

### BRIEF DESCRIPTION OF THE DRAWINGS

The included drawings are used to provide further understanding of the embodiments of the present application, which constitute a part of the description and are used to illustrate the implementations of the present application and explain the principles of the present application together with textual description. Evidently, the drawings in the following description are merely some embodiments of the present application, and a person of ordinary skill in the art may obtain other implementations according to the drawings without involving inventive effort. In the drawings:
FIG. 1 is a schematic diagram of field of view parameters in CT according to an embodiment of the present application;
FIG. 2 is a schematic diagram of a medical image processing method according to an embodiment of the present application;
FIG. 3 is a schematic diagram of a raw medical image according to an embodiment of the present application;
FIG. 4 is a schematic diagram of a multivalued image according to an embodiment of the present application;
FIG. 5 is a schematic diagram of a metal artifact removal principle according to an embodiment of the present application;
FIG. 6 is a schematic diagram of a method for determining a correspondence according to an embodiment of the present application;
FIG. 7 is a schematic diagram of a first medical image according to an embodiment of the present application;
FIG. 8 is a schematic flowchart of a medical image processing method according to an embodiment of the present application;
FIG. 9 is a schematic diagram of a medical image processing apparatus according to an embodiment of the present application;
FIG. 10 is a schematic diagram of a medical image processing device according to an embodiment of the present application;
FIG. 11 is a schematic diagram of a medical device according to an embodiment of the present application;
FIG. 12 is a schematic diagram of a reconstructed image of a specific material site according to an embodiment of the present application; and
FIG. 13 is a schematic diagram of a path of a specific material site in raw projection data according to an embodiment of the present application.

### DETAILED DESCRIPTION

The foregoing and other features of the embodiments of the present application will become apparent from the following description with reference to the drawings. In the description and drawings, specific implementations of the present application are disclosed in detail, and part of the implementations in which the principles of the embodiments of the present application may be employed are indicated. It should be understood that the present application is not limited to the described implementations.

In the embodiments of the present application, the terms "first", "second", etc., are used to distinguish different elements by their title, but do not represent a spatial arrangement or temporal order, etc., of these elements, and these elements should not be limited by these terms. The term "and/or" includes any one of and all combinations of one or more associated listed terms. The terms "comprise", "include", "have", etc., refer to the presence of described features, elements, components, or assemblies, but do not exclude the presence or addition of one or more other features, elements, components, or assemblies.

In the embodiments of the present application, the singular forms "a" and "the", etc., include plural forms, and should be broadly construed as "a type of" or "a class of" rather than being limited to the meaning of "one". Furthermore, the term "the" should be construed as including both the singular and plural forms, unless otherwise specified in the context. In addition, the term "according to" should be construed as "at least in part according to...", and the term "based on" should be construed as "based at least in part on...", unless otherwise specified in the context.

The term "include/comprise" when used herein refers to the presence of features, integrated components, steps, or assemblies, but does not exclude the presence or addition of one or more other features, integrated components, steps, or assemblies.

The device described herein for obtaining medical image data may be applicable to various medical imaging modalities, including, but not limited to, computed tomography (CT) devices, or any other suitable medical imaging devices.

For example, CT uses X-rays to perform continuous cross-sectional scanning around a certain part of a scan subject, and the X-rays that pass through a section are received by a detector and transformed into visible light, or a received photon signal is directly converted to perform image reconstruction after a series of processing. MRI forms an image by means of reconstruction, based on the principle of nuclear magnetic resonance of atomic nuclei, by transmitting radio frequency pulses to the scan subject and receiving electromagnetic signals released by the scan subject.

The system for obtaining medical images may include the aforementioned medical imaging device, and may include a separate computer device connected to the medical imaging device, and may further include a computer device connected to an Internet cloud, the computer device being connected by means of the Internet to the medical imaging device or a memory for storing medical images. The imaging method may be independently or jointly implemented by the aforementioned medical imaging device, the computer device connected to the medical imaging device, and the computer device connected to the Internet cloud.

In addition, a medical imaging workstation may be disposed locally at the medical imaging device. That is, the medical imaging workstation is disposed near to the medical imaging device, and the medical imaging workstation and medical imaging device may be located together in a scanning room, an imaging department, or the same hospital. In contrast, a medical image cloud platform analysis system may be positioned distant from the medical imaging device, e.g., arranged at a cloud end that is in communication with the medical imaging device.

As an example, after a medical institution completes an imaging scan using the medical imaging device, data obtained by scanning is stored in a storage device. A medical imaging workstation may directly read the data obtained by scanning and perform image processing by means of a processor thereof. As another example, the medical image cloud platform analysis system may read a medical image in the storage device by means of remote communication to provide "software as a service (SaaS)." SaaS can exist between hospitals, between a hospital and an imaging center, or between a hospital and a third-party online diagnosis and treatment service provider.

In the embodiments of the present application, the term "subject to be examined" may include any object being imaged. The term "projection data" is interchangeable with "projection image" and "sinogram".

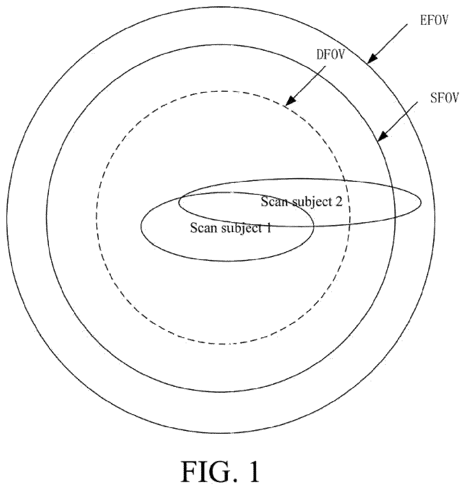

FIG. 1 is a schematic diagram of field of view parameters in CT scanning according to an embodiment of the present application. As shown in FIG. 1, the region of the largest circle 1 represents a circular bore of a housing of a gantry, the region of a circle 2 represents the largest region of valid data that can be acquired by a detector, the region of a circle 3 is a region of an image to be reconstructed, and the position and the size of the circle 3 can be adjusted.

When CT scanning is performed, it is usually necessary to configure a scan field of view (SFOV) and a display field of view (DFOV, also referred to as a reconstruction field of view). The SFOV is a scanning range set by a CT device itself and corresponds to the region of the circle 2, and an SFOV of an appropriate size, e.g., 40 cm to 50 cm, can be selected for different examination sites. The DFOV corresponds to the region of the circle 3, and is a display range of a reconstructed image that is set before examination. After the scanning ends, the size of the display field of view can be changed to reconstruct an image. Generally, the DFOV is less than or equal to the SFOV, e.g., 25 cm or 36 cm. The smaller the DFOV, the higher the resolution of the reconstructed image. During scanning, the scan subject can be placed within the SFOV. For example, by means of aligning the center of the scan subject 1 with the center of the SFOV, the SFOV covers the scan subject, and thus the reconstructed image can reflect complete information of the scan subject. When the scan subject is obese, or the center of the scan subject is shifted, or the scan subject is in a special pose, for example, part of a scan subject 2 is outside of the SFOV, the reconstructed image will be truncated in this case. In this situation, an extended field of view (EFOV, also referred to as a maximum field of view (MaxFOV), corresponding to the region of the circle 1, e.g., 75 cm to 80 cm, etc.) algorithm can be used for image reconstruction to fill in truncated data, to obtain complete information of the scan subject 2.

At present, CT metal artifact removal methods are mainly based on the logic of a normalized metal artifact reduction (NMAR) algorithm, i.e., a method for sinogram interpolation. However, the inventors believe that in the method, to a certain extent, there are still residual artifacts to be eliminated, for example, a black halo is present around metal, which may be misdiagnosed as a metal fracture, or blurring may occur at or near the metal, which reduces resolution; or there may be residual streaks, and even worse streaks or the like generated in another region.

In view of at least one of the above technical problems, the embodiments of the present application provide a medical image processing method and apparatus and a medical device. Multivalued processing is performed on a raw medical image to obtain a multivalued image. According to a correspondence between the degree of contribution, relating to a ray absorption amount, of each tissue on a ray path that does not pass through a specific material site in the multivalued image and a raw projection value corresponding to the ray path in raw projection data, a predicted projection value of a path corresponding to the specific material site in the raw projection data is determined, thereby further removing metal artifacts in the reconstructed image and significantly improving image quality.

The following is a specific description of the embodiments of the present application with reference to the drawings.

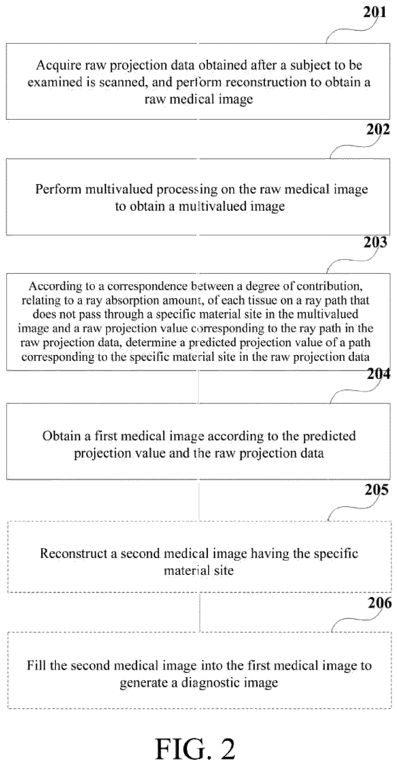

An embodiment of the present application provides a medical image processing method. FIG. 2 is a schematic diagram of a medical image processing method according to an embodiment of the present application. As shown in FIG 2, the method includes:
201, acquiring raw projection data obtained after a subject to be examined is scanned, and performing reconstruction to obtain a raw medical image;
202, performing multivalued processing on the raw medical image to obtain a multivalued image;
203, according to a correspondence between a degree of contribution, relating to a ray absorption amount, of each tissue on a ray path that does not pass through a specific material site in the multivalued image and a raw projection value corresponding to the ray path in the raw projection data, determining a predicted projection value of a path corresponding to the specific material site in the raw projection data; and
204, obtaining a first medical image according to the predicted projection value and the raw projection data.

In some embodiments, in 201, the scanning of the subject to be examined includes, but is not limited to, computed tomography (CT) or any other suitable medical imaging technology, and data (raw data) acquired by the scanning is processed to obtain the raw projection data (sinogram data). For details, reference may be made to the related art, and the details are not described herein. The raw projection data is reconstructed to obtain the raw medical image. The image reconstruction algorithm may include: for example, a back projection (FBP) reconstruction method, an adaptive statistical iterative reconstruction (ASIR) method, a conjugate gradient (CG) method, a maximum likelihood expectation maximization (MLEM) method, a model-based iterative reconstruction (MBIR) method, etc. For details, reference may be made to the related art, and the embodiments of the present application are not limited thereto.

In some embodiments, the raw medical image is an image reconstructed within a first predetermined field of view (DFOV1), and the size of the first predetermined field of view (DFOV1) needs to enable the reconstructed image to include the entire boundary or contour of the subject to be examined or include the entire boundary or contour of a region of interest of the subject to be examined, to ensure that the reconstructed raw medical image includes, e.g., a metal implant of the subject to be examined and an artifact generated by the metal implant. For example, the size of the first predetermined field of view is the size of an extended field of view (EFOV) or a maximum field of view (MaxFOV), or, an extended field of view or maximum field of view algorithm is used for reconstruction of the raw projection data to obtain the raw medical image. However, the embodiments of the present application are not limited thereto. For example, the size of the first predetermined field of view may alternatively be the size of an SFOV, or reconstruction of the raw projection data is performed in the SFOV to obtain the raw medical image, that is, DFOV1 equals SFOV in this case.

In some embodiments, in 202, the performing multivalued processing on the raw medical image to obtain a multivalued image comprises: comparing CT values of pixel positions in the raw medical image with a plurality of thresholds corresponding to CT values of different types of tissues, and according to comparison results, redetermining pixel values of the pixel positions to obtain the multivalued image, wherein in the multivalued image, pixel values corresponding to different tissues are different, and pixel values corresponding to the same tissues are the same.

In some embodiments, the CT values of the pixel positions are corresponding values (in units of HU) of linear attenuation coefficients of tissues or organs to radiation rays, which can measure absorption rates of the tissues or organs for the radiation rays. For example, the CT value of water is generally 0, the CT value of air is generally -1000, the CT value of fat is generally -150 to -50, the CT value of muscle is 40 to 80, the CT value of bone is generally 200 to 3000, and the CT value of metal is generally more than 4000. That is, different tissues in the raw medical image can be distinguished according to different CT values of the tissues. For the CT values of the tissues, reference may be made to the prior art. The foregoing is only an example herein, and the embodiments of the present application are not limited thereto.

In some embodiments, the thresholds of the CT values of different types of tissues may be upper and lower limit values of a value range, or may alternatively be a single value (an upper limit value or a lower limit value). For example, a metal threshold is 4000, bone thresholds are 200 and 3000, muscle thresholds are 40 and 80, fat thresholds are -150 and -50, an air threshold is -1000, a water threshold is 0, etc. The foregoing is only an example herein, and the embodiments of the present application are not limited thereto.

In some embodiments, the thresholds of the CT values of different types of tissues are preset, and thresholds of the CT values of the tissues set for different subjects to be examined or for different regions of interest (or organs) may be the same or different. The embodiments of the present application are not limited thereto. For example, for a head or spine region, the threshold of the CT value of each type of tissues is set as follows: a metal threshold (Tm₁), a bone threshold (Tb₁), a muscle threshold (Tc₁), a fat threshold (Tf₁), and an air threshold (Ta₁). For a joint region, the threshold of the CT value of each type of tissue are set as follows: a metal threshold (Tm₂), a bone threshold (Tb₂), a muscle threshold (Tc₂), a fat threshold (Tf₂), and an air threshold (Ta₂). No further examples will be provided herein.

In some embodiments, the thresholds of the CT values of different types of tissues may be adaptively set according to a subject to be examined. For example, the thresholds of the CT values of the different types of tissues of the subject to be examined may be determined according to the CT values of each tissue in reconstructed images of other slices of the subject to be examined that are not contaminated by a specific material site (hereinafter, metal is used as an example); for example, the thresholds of the CT values of the different types of tissues of the subject to be examined may be determined according to the average value of the CT values of each tissue in the reconstructed images of the slices of the subject to be examined that are not contaminated by the specific material site (hereinafter, metal is used as an example), or the value range of the CT value of each tissue. The embodiments of the present application are not limited thereto.

In some embodiments, before the multivalued processing, it is also necessary to set in advance a pixel value representing each type of tissue in the multivalued image, or set in advance a pixel value assigned to each type of tissue in the multivalued image. In the multivalued image, different tissues correspond to different pixel values, and the same tissues correspond to the same pixel value (in the same multivalued image, the same tissues correspond to the same ray absorption coefficient), or the same pixel value corresponds to the same type of tissue and different pixel values correspond to different types of tissues. For example, the assigned pixel values may have a positive correlation with the CT values of each type of tissue, that is, although the pixel values are not the CT values of each type of tissue, the pixel values may reflect a relative magnitude relationship of the linear attenuation coefficients of each type of tissue to radiation rays. For example, the assigned pixel values may be the thresholds of the CT values of each type of tissue, or an average value of the thresholds. Alternatively, the assigned pixel values may be ray absorption coefficients of different tissues or an integral multiple of the absorption coefficients (for example, a muscle absorption coefficient is 1, a bone absorption coefficient is 3, and a fat absorption coefficient is 0.5). The foregoing is only an example herein, and the embodiments of the present application are not limited thereto. For example, in the multivalued image, a pixel value corresponding to metal is set to 200, a pixel value corresponding to bone is set to 100, a pixel value corresponding to muscle is set to 50, and a pixel value corresponding to fat is set to 20, etc., which will not be described in detail herein. The pixel values are grayscale values. In addition, a pixel value of the specific material site (hereinafter, metal is used as an example) may be set to 0 for ease of later description of calculating a degree of contribution. However, the embodiments of the present application are not limited thereto.

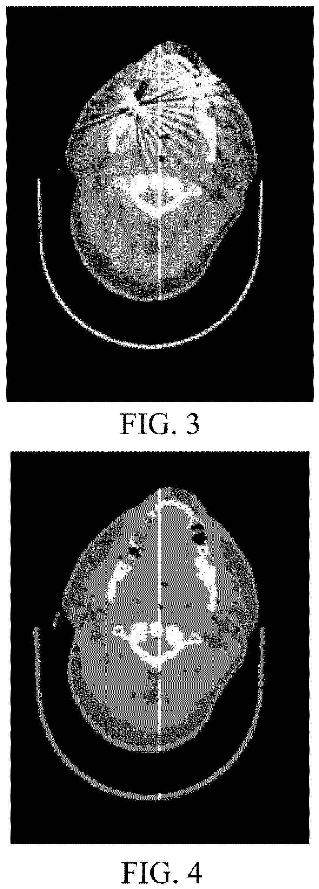

In some embodiments, the CT values of pixel positions in the raw medical image are compared with the plurality of thresholds corresponding to the CT values of different types of tissues, and the pixel values of the pixel positions are redetermined according to comparison results, to obtain the multivalued image. For example, a value range in which the CT value of each pixel position in the raw medical image is located is determined, so that it can be determined that the pixel position belongs to a tissue corresponding to the value range. In the multivalued image, the pixel value of the pixel position is reset to a preset pixel value representing the tissue. That is, the multivalued image is the same size and has the same quantity of pixels as the raw medical image, but has a different pixel value for each pixel position. FIG. 3 is a schematic diagram of a raw medical image according to an embodiment of the present application, and FIG. 4 is a schematic diagram of a multivalued image according to an embodiment of the present application. That is, the multivalued image shown in FIG. 4 is obtained after multivalued processing is performed on the raw medical image shown in FIG. 3.

In the embodiments of the present application, by performing multivalued processing on the raw medical image to obtain the multivalued image, and using the multivalued image to perform projection value prediction, the impact of metal artifacts can be minimized as much as possible. This is because the inventors have found that the multivalued image is basically consistent after the multivalued processing regardless of whether the raw medical image includes metal artifacts. In other words, the multivalued image is basically not affected by metal artifacts. Therefore, by using multivalued image to perform subsequent processing, the impact of metal artifacts can be avoided as much as possible.

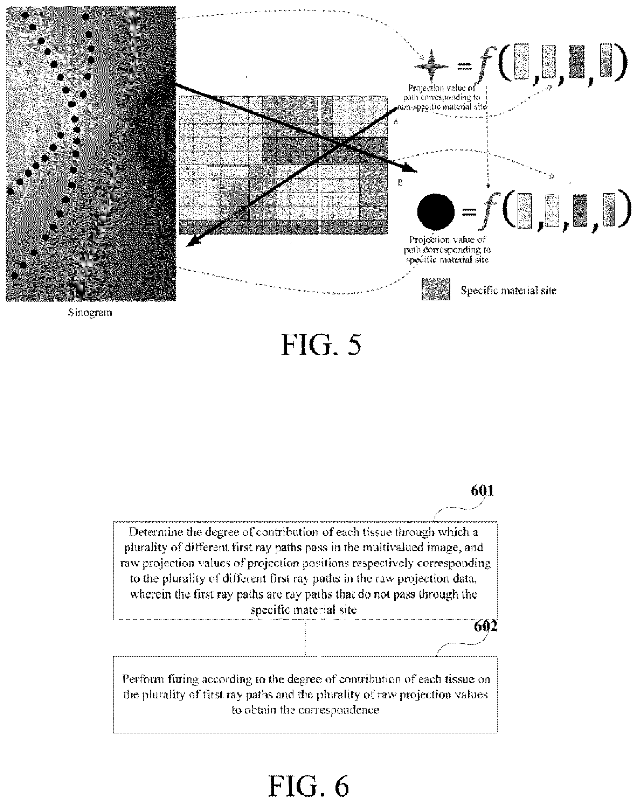

The following first describes a metal artifact removal principle in the embodiments of the present application with reference to FIG. 5. As shown in FIG. 5, a straight line in the figure may be considered a ray path, and the ray path passes through different tissues in the raw medical image (or the multivalued image). If a ray path A does not pass through (traverse) metal, a projection value of a corresponding projection position of the ray path in the raw projection data is not affected by the metal, in other words, the projection value is accurate. If a ray path B passes through (traverses) the metal, a projection value of a corresponding projection position of the ray path in the raw projection data is affected by the metal, in other words, the projection value is inaccurate. According to projection principles of the raw projection data and the raw medical image, the corresponding projection position of the ray path can be determined on a sinogram corresponding to the raw projection data (uniquely determined according to a projection angle and a detector channel position; for details, reference may be made to the related art), the projection value of the projection position is equal to a weighted sum of pixel values through which the ray path passes in the reconstructed image, and a weighting function is a line segment length of the ray path in pixels. The inventors have studied to find that, although the weighted sum of the pixel values (due to being reassigned) through which the ray path passes in the multivalued image is not equal to the projection value, there is a correspondence (function relationship) between the degree of contribution (the meaning of the degree of contribution will be described later) of each tissue through which any ray path passes in the multivalued image and a raw projection value of a projection position corresponding to the ray path in the raw projection data, that is, the correspondence (function relationship f) is the same for each ray path (e.g., A and B) (it is assumed that the specific material site does not exist). Therefore, the projection value of a projection position corresponding to a ray path that passes through the specific material site may be predicted according to the correspondence, and the predicted projection value is used to replace the original inaccurate projection value, to remove artifacts of the specific material site. It should be noted that in the following description of the present application, metal is used as an example of the specific material site, but the present application is not limited thereto.

In some embodiments, before 203, the method further includes: determining the correspondence between a degree of contribution, relating to a ray absorption amount, of each tissue on a ray path that does not pass through a specific material site in the multivalued image and a raw projection value corresponding to the ray path in the raw projection data. FIG. 6 is a schematic diagram of a method for determining the correspondence according to an embodiment of the present application. As shown in FIG. 6, the method includes:
601, determining the degree of contribution of each tissue through which a plurality of different first ray paths pass in the multivalued image, and raw projection values of projection positions respectively corresponding to the plurality of different first ray paths in the raw projection data, wherein the first ray paths are ray paths that do not pass through the specific material site; and
602, performing fitting according to the degree of contribution of each tissue on the plurality of first ray paths and the plurality of raw projection values, to obtain the correspondence.

For ease of understanding, it will first be described how to determine the specific material site and a path corresponding to the specific material site in the raw projection data.

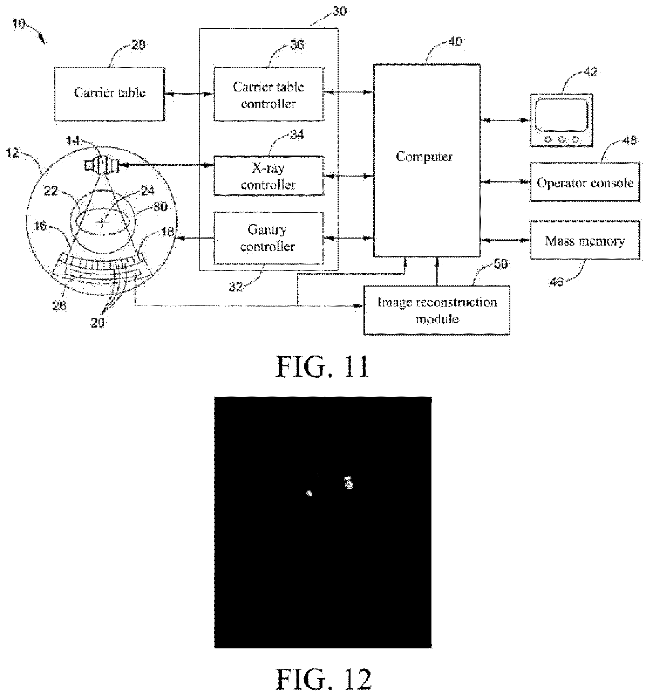

In some embodiments, determining the position of the specific material site in the raw medical image includes: comparing CT values of pixels in the raw medical image with a preset CT value corresponding to the specific material; and determining the location of pixels having a CT value greater than the preset CT value as the specific material site. For example, when the specific material site is metal, the preset CT value may be 4000 HU, and a region in which pixels having a CT value greater than 4000 HU are located may be determined as a metal site in the raw medical image shown in FIG. 3, wherein the CT value of each pixel other than the specific material site in the raw medical image may be set to 0. In such a manner, images other than the specific material site may be removed from the raw medical image, to obtain an intermediate image including only the metal site, as shown in FIG. 12.

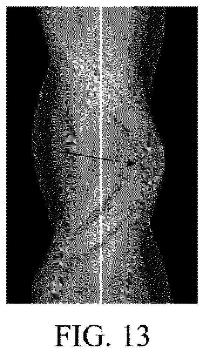

In some embodiments, forward projection is performed on the position of the specific material site in the raw medical image to determine the path corresponding to the specific material site in the raw projection data. For example, the intermediate image is forward projected into a sine domain space to obtain projection data of the intermediate image. In such a manner, the path corresponding to the specific material site can be located from sinogram data (raw projection data). As shown in FIG. 13, the path corresponding to the specific material site is marked on the sinogram corresponding to the raw projection data.

In some embodiments, in 601, N different first ray paths may be selected, where the first ray paths are ray paths that do not pass through the specific material site. In order to improve the accuracy of a prediction result of a projection value, N first ray paths may be selected. The distance between each of the projection positions corresponding to the N first ray paths in the raw projection data and a projection position corresponding to each subsequently described second ray path in the raw projection data is less than or equal to a preset value. The preset value may be set as needed. The embodiments of the present application are not limited thereto. That is, a projection value of the projection position corresponding to each second ray path is predicted by using a projection value of a projection position in the vicinity of the projection position corresponding to the second ray path, so that the prediction result can be more accurate. The second ray paths will be described later.

In some embodiments, in 601, after the N first ray paths are selected, for each first ray path, the length or area (representing the size of each tissue) of each tissue through which the first ray paths pass in the multivalued image is respectively calculated, and the length or area (which may be considered a geometric contribution) is multiplied by a contribution weighting value (which may be considered a physical contribution) of the tissue to obtain the degree of contribution of the tissue, wherein the contribution weighting value reflects the degree of ray absorption of the tissue, for example, the contribution weighting value is equal to the ray absorption coefficient of the tissue. For example, the muscle absorption coefficient is 1, the bone absorption coefficient is 3, the fat absorption coefficient is 0.5, etc. Different tissue absorption coefficients are also related to the scanning voltage. For details, reference may be made to the related art, and the details will not be described herein.

Using a single first ray path as an example, the first ray path passes through four types of tissues, i.e., fat, bone, muscle, and air, in the multivalued image, the lengths of the tissues in the multivalued image are L1, L2, L3, and L4, and the ray absorption coefficients of the tissues are C1, C2, C3, and C4. Therefore, the degrees of contribution of the tissues through which the first ray path passes in the multivalued image are L1×C1, L2×C2, L3×C3, and L4×C4.

In some embodiments, the length of each tissue on the first ray path, i.e., the length of a line segment of each tissue in pixels (corresponding to the aforementioned weighting function), may be calculated by using a forward projection method. For details, reference may be made to the related art, and the details will not be described herein. In some cases, considering the width of a detector channel, the area of each tissue (i.e., the sum of the areas of pixels occupied by the tissues) on the first ray path can be calculated, and the quantity of pixels occupied by each tissue on the first ray path may be calculated by using the forward projection method. The sum of the areas is equal to the area of each pixel multiplied by the quantity of pixels, and the details are not described herein.

In some embodiments, in 602, N projection positions corresponding to the N first ray paths on a sinogram corresponding to the raw projection data may be determined according to a projection relationship, and projection values Pₛᵢₙₒ₁, ..., and P_{sinoN} corresponding to the N projection positions are determined in the raw projection data. The degree of contribution of each tissue through which the plurality of first ray paths pass in the multivalued image and a plurality of raw projection values are fitted to obtain the correspondence. The correspondence may also be expressed using the following function: y = f(x₁, x₂, ..., x_{Z}), where y represents a projection value Pₛᵢₙₒ, x₁, x₂, ..., and x_{Z} represent the degree of contribution of each tissue, and the quantity of Z may be determined according to the number of all tissue types except for the specific material site in the multivalued image, i.e., Z is equal to the number of all tissue types in the multivalued image - 1. If the first ray paths do not pass through a certain tissue, the degree of contribution of the tissue is 0. For example, five types of tissues are included in the multivalued image: metal, fat, bone, muscle, and air. In this case, Z = 4. A first ray path A1 passes through fat (the length is L1), bone (the length is L2), and air (the length is L4) in the multivalued image, and the degrees of contribution of the tissues are L1×C1, L2×C2, and L4×C4. Because the first ray path A1 does not pass through muscle (L3 = 0) in addition to the specific material site in the multivalued image, the degree of contribution of muscle on the first ray path A1 may be considered 0. The projection value corresponding to the first ray path A1 is Pₛᵢₙₒ₁, and Pₛᵢₙₒ₁ = f(L1×C1, L2×C2, 0, L4×C4). Similarly, for a first ray path AN, P_{sinoN} = f(L1_{N}×C1, L2_{N}×C2, L3_{N}×C3, L4_{N}×C4).

In some embodiments, the degree of contribution of each tissue through which the plurality of first ray paths pass in the multivalued image and the plurality of raw projection values are fitted according to a machine learning method or a depth learning method, to obtain the correspondence Pₛᵢₙₒ = f(x₁, x₂, ..., x_{Z}). The specific fitting methods may include, for example, high-order polynomial fitting, etc. For details, reference may be made to the related art, and the embodiments of the present application are not limited thereto.

In some embodiments, for each (M) projection positions on the path (as marked in FIG. 13) corresponding to the specific material site on the sinogram corresponding to the raw projection data, a ray path corresponding to each projection position is determined according to a back projection method. The ray paths serve as M second ray paths, and thus the second ray paths are ray paths passing through the specific material site, where N and M are integers greater than 1.

In some embodiments, in 203, first, the degree of contribution of each tissue, other than the specific material site, through which each second ray path passes in the multivalued image is determined, i.e., assuming that the specific material site does not exist, and the length or area of each tissue, other than the specific material site, through which the second ray path passes in the multivalued image is respectively calculated. The degree of contribution of the tissue is obtained by multiplying the length or area by a contribution weighting value of the tissue, e.g., the contribution weighting value is equal to the ray absorption coefficient of the tissue. For example, the muscle absorption coefficient is 1, the bone absorption coefficient is 3, the fat absorption coefficient is 0.5, etc. Different tissue absorption coefficients are also related to the scanning voltage. For details, reference may be made to the related art, and the details will not be described herein. The above differs from the first ray path in that: during calculation of the degree of contribution, the first ray path does not pass through the specific material site, and thus the degree of contribution of the specific material site is not calculated. The second ray path passes through the specific material site, but it is assumed that the specific material site does not exist, and thus the degree of contribution of the specific material site is also not calculated. Alternatively, for ease of calculation, the contribution weighting value of the specific material site may be considered 0, that is, on the second ray path, the degree of contribution of the specific material site is 0, which may be considered as the specific material site not existing. The embodiments of the present application are not limited thereto.

In some embodiments, in 203, a projection value corresponding to the degree of contribution of each tissue other than the specific material site on each second ray path is determined as the predicted projection value according to the correspondence Pₛᵢₙₒ = f(x₁, x₂, ..., x_{Z}). For example, for each second ray path, the calculated degrees of contribution W₁, W₂, ..., and W_{Z} of the tissues other than the specific material site are substituted into the above function, and an obtained function value is used as the predicted projection value, i.e., P_{sino-predict} = f(W₁, W₂, ..., W_{Z}). Hence, the predicted projection value of the path corresponding to the specific material site in the raw projection data is determined.

In some embodiments, it can be seen from the foregoing analysis that the second ray path passes through the specific material site (e.g., metal), and a projection value of the projection position corresponding to the second ray path in the raw projection data is affected by the specific material site and is inaccurate. However, the predicted projection value obtained in 203 is determined according to the correspondence between the degree of contribution, related to a ray absorption amount, of each tissue on the ray path that does not pass through the specific material site and the raw projection value corresponding to the ray path in the raw projection data. Therefore, the impact of the specific material site can be avoided, so that predicted projection values of other tissues not contaminated by the specific material site can be obtained under the assumption that the specific material site does not exist, and a medical image (not including the specific material site) can be reconstructed based on the predicted projection values, as described in detail below.

In some embodiments, in 204, a raw projection value of the path corresponding to the specific material site in the raw projection data is replaced with the predicted projection value, to obtain first projection data; and the first medical image is obtained according to the first projection data. For example, the first projection data is reconstructed to obtain the first medical image. The image reconstruction algorithms may include: for example, a back projection (FBP) reconstruction method, an adaptive statistical iterative reconstruction (ASIR) method, a conjugate gradient (CG) method, a maximum likelihood expectation maximization (MLEM) method, a model-based iterative reconstruction (MBIR) method, etc. For details, reference may be made to the related art, and the embodiments of the present application are not limited thereto.

In some embodiments, there may be problems of non-smoothness and discontinuity between the predicted projection value and projection values of a nearby positions of the predicted projection value in the original projection data. In view of this problem, in 204, after the first projection data is obtained, the predicted projection value is corrected, in the first projection data, by using raw projection values around the location of the predicted projection value, to obtain second projection data. The nearby positions include a predetermined quantity of projection positions to the left and right of the position of the predicted projection value. The correction processing includes multiplying, in the first projection data, the projection values of the nearby positions and/or the predicted projection value by a predetermined smoothing function to obtain the second projection data. For the design of the smoothing function, reference may be made to the related art, and the embodiments of the present application are not limited thereto. Then, the second projection data is reconstructed to obtain the first medical image. The image reconstruction algorithm may include: for example, a back projection (FBP) reconstruction method, an adaptive statistical iterative reconstruction (ASIR) method, a conjugate gradient (CG) method, a maximum likelihood expectation maximization (MLEM) method, a model-based iterative reconstruction (MBIR) method, etc. For details, reference may be made to the related art, and the embodiments of the present application are not limited thereto. Potential artifacts of a metal boundary can be reduced by means of the correction processing.

In some embodiments, the first medical image is an image reconstructed within a second predetermined field of view (DFOV2). The size of the second predetermined field of view (DFOV2) may be less than or equal to that of the first predetermined field of view, for example, may be determined according to a region of interest (imaging organ) of the subject to be examined, for example, may be set to 25 cm or 36 cm. For details, reference may be made to the related art, and the embodiments of the present application are not limited thereto.

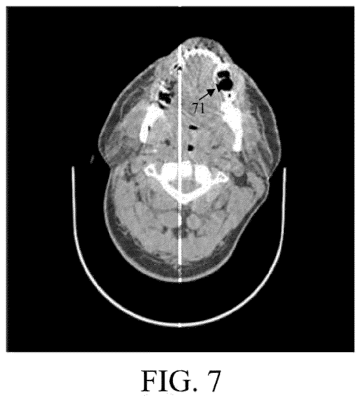

In some embodiments, according to the foregoing embodiments, it can be seen that the first medical image obtained through reconstruction by using the predicted projection value does not include the specific material site (because the predicted projection value is obtained by assuming that the specific material site does not exist). FIG. 7 is a schematic diagram of a first medical image according to an embodiment of the present application. As shown in FIG. 7, the first medical image is a medical image in which the specific material site is a hole 71, that is, the first medical image does not include a reconstructed image of the specific material site. Compared with FIG. 3, the reconstructed images of other tissues in the first medical image are not contaminated by the specific material site, and metal artifacts are removed from the image, thereby significantly improving the image quality.

It can be seen from the foregoing embodiments that the first medical image is a reconstructed image that does not include the specific material site, and in order to acquire a complete diagnostic image, the method may further include (optional):
205, reconstructing a second medical image having the specific material site; and
206, filling the second medical image into the first medical image to generate a diagnostic image.

In some embodiments, for the raw projection data, image reconstruction can be performed within a third predetermined field of view (DFOV3) to obtain the second medical image, and an image of the specific material site (the determination manner is as described above and is not described herein again) in the second medical image may be backfilled into the hole 71 of the first medical image to generate the diagnostic image. For example, the third predetermined field of view may be equal to the second predetermined field of view.

In some embodiments, in order to improve the resolution of the specific material site (for example, in order to clearly see threads and so on when the specific material site is a screw), for the raw projection data, the second medical image having the specific material site may be reconstructed using a third predetermined field of view that is smaller than the second predetermined field of view. For example, after the specific material site is determined in the step shown in FIG. 12, the center of the specific material site may be used as the center of the third predetermined field of view. The second medical image is obtained through reconstruction of the raw projection data within the third predetermined field of view, and an image of the specific material site is determined from the second medical image (for example, a region in which pixels having CT values of more than 4000 HU are located is determined as a metal site, where the CT value of each pixel other than the specific material site in the second medical image may be set to 0). Because the second medical image and the first medical image are reconstructed within fields of view of different sizes, the specific material site in the second medical image is scaled according to a scaling factor, and a scaled image of the specific material site is filled into a corresponding position on the first medical image to obtain the diagnostic image. The scaling factor is related to the sizes of the second predetermined field of view and the third predetermined field of view. For example, the scaling factor is equal to DFOV2/DFOV3, the image of the specific material site in the second medical image is multiplied by the scaling factor to obtain the scaled image, and the scaled image is backfilled into the hole 71 of the first medical image to obtain the diagnostic image. The backfilling operation includes superimposing pixel values of the scaled image and the first medical image to generate the diagnostic image, which will not be further described herein.

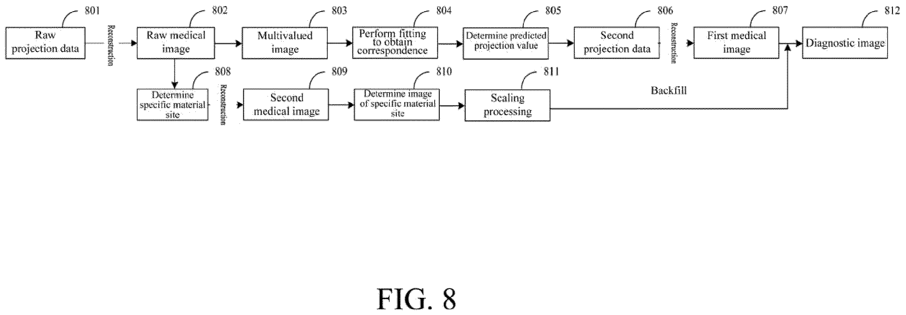

The medical image processing flow of the present application is further described below with reference to FIG. 8.

In some embodiments, in 801, raw projection data obtained after a subject to be examined is scanned is acquired; in 802, the raw projection data is reconstructed within a first predetermined field of view to obtain a raw medical image; in 803, multivalued processing is performed on the raw medical image to obtain a multivalued image; in 804, a correspondence between a degree of contribution, relating to a ray absorption amount, of each tissue on a ray path that does not pass through a specific material site in the multivalued image and a raw projection value corresponding to the ray path in the raw projection data is determined; in 805, a second ray path is determined according to a path corresponding to the specific material site, and a predicted projection value of a projection position corresponding to the second ray path in the raw projection data is determined according to the correspondence; in 806, a raw projection value of the path corresponding to the specific material site in the raw projection data is replaced with the predicted projection value, to obtain first projection data; and the predicted projection value is corrected in the first projection data by using raw projection values around the location of the predicted projection value, to obtain second projection data; and in 807, a first medical image is reconstructed by reconstructing the second projection data within a second predetermined field of view.

In some embodiments, in 808, the specific material site is determined for the raw medical image; in 809, using the specific material site as the center, the raw projection data is reconstructed in a third predetermined field of view to obtain a second medical image; in 810, an image of the specific material site is determined from the second medical image; in 811, scaling processing is performed on the image of the specific material site in 810 according to a scaling factor; and in 812, an image having undergone scaling processing is filled into the first medical image obtained in 807 to obtain a final diagnostic image. It should be noted that FIG. 2 or FIG. 8 above merely schematically illustrates the embodiments of the present application, but the present application is not limited thereto. For example, the order of execution between the operations may be appropriately adjusted. In addition, some other operations may be added or some operations may be omitted. Those skilled in the art could make appropriate variations according to the above content rather than being limited by the disclosure of FIG. 2 or FIG. 8.

The above embodiments merely provide illustrative descriptions of the embodiments of the present application. However, the present application is not limited thereto, and appropriate variations may be made on the basis of the above embodiments. For example, each of the above embodiments may be used independently, or one or more among the above embodiments may be combined. The embodiments of the present application are not limited thereto.

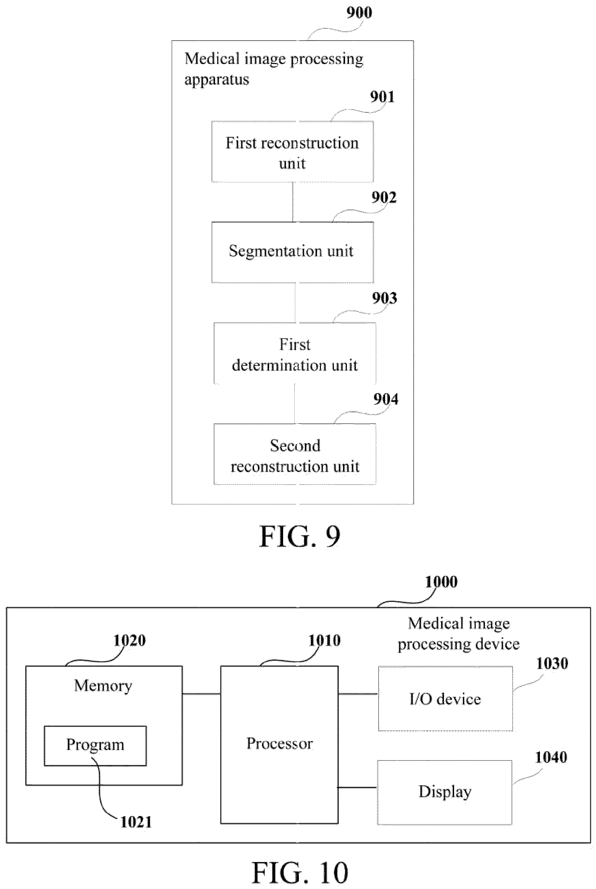

Further provided in an embodiment of the present application is a medical image processing apparatus. FIG. 9 is a schematic diagram of the medical image processing apparatus according to the embodiment of the present application. As shown in FIG. 9, the apparatus 900 includes:
a first reconstruction unit 901, the first reconstruction unit 901 acquiring raw projection data obtained after a subject to be examined is scanned, and performing reconstruction to obtain a raw medical image;
a segmentation unit 902, the segmentation unit 902 performing multivalued processing on the raw medical image to obtain a multivalued image;
a first determination unit 903, the first determination unit 903 determining, according to a correspondence between a degree of contribution, relating to a ray absorption amount, of each tissue on a ray path that does not pass through a specific material site in the multivalued image and a raw projection value corresponding to the ray path in the raw projection data, a predicted projection value of a path corresponding to the specific material site in the raw projection data; and
a second reconstruction unit 904, the second reconstruction unit 904 obtaining a first medical image according to the predicted projection value and the raw projection data.

In some embodiments, for implementations of the first reconstruction unit 901, the segmentation unit 902, the first determination unit 903, and the second reconstruction unit 904, reference may be made to 201-204 of the foregoing embodiments. Details are not described herein again.

In some embodiments, the apparatus may further include:
a second determination unit (not shown), the second determination unit determining the position of the specific material site in the raw medical image, for example, comparing CT values of pixels in the raw medical image with a preset CT value corresponding to the specific material, and determining the location of pixels having CT values greater than the preset CT value as the specific material site.

In some embodiments, the second determination unit may further perform forward projection on the position of the specific material site in the raw medical image to determine the path corresponding to the specific material site in the raw projection data.

In some embodiments, the apparatus may further include: (not shown)
a third reconstruction unit, the third reconstruction unit reconstructing a second medical image having the specific material site; and
a generation unit, the generation unit filling the second medical image into the first medical image to generate a diagnostic image.

For implementations of the second determination unit, the third reconstruction unit, and the generation unit, reference may be made to the foregoing embodiments, and the details are not described herein again.

For simplicity, the above figure only exemplarily illustrates the connection relationship or signal direction between various components or modules, but it should be clear to those skilled in the art that various related technologies such as bus connection may be used. The various components or modules can be implemented by means of hardware such as a processor or a memory, etc. The embodiments of the present application are not limited thereto.

The above embodiments merely provide illustrative descriptions of the embodiments of the present application. However, the present application is not limited thereto, and appropriate variations may be made on the basis of the above embodiments. For example, each of the above embodiments may be used independently, or one or more among the above embodiments may be combined.

Further provided in an embodiment of the present application is a medical image processing device. FIG. 10 is a schematic structural diagram of the medical image processing device according to the embodiment of the present application. As shown in FIG. 10, the medical image processing device 1000 may include: one or more processors (e.g., central processing unit (CPU)) 1010 and one or more memories 1020. The memory 1020 is coupled to the processor 1010. The memory 1020 can store correspondences, etc., and further inputs a control program 1021 of the device, and the program 1021 is executed under the control of the processor 1010. The memory 1020 may include, for example, a ROM, a floppy disk, a hard disk, an optical disk, a magneto-optical disk, a CD-ROM, or a non-volatile memory card.

In some embodiments, the functions of the medical image processing apparatus 900 are integrated into the processor 1010 for implementation. The processor 1010 is configured to implement the medical image processing method as described in the foregoing embodiments. For implementation of the processor 1010, reference may be made to the foregoing embodiments. The details are not described herein again.

In some embodiments, the medical image processing apparatus 900 and the processor 1010 are configured separately, for example, the medical image processing apparatus 900 can be configured as a chip connected to the processor 1010, and the functions of the medical image processing apparatus 900 can be implemented by controlling the processor 1010.

In addition, as shown in FIG. 10, the medical image processing device 1000 may further include: an input device 1030, a display 1040 (displaying a graphical user interface, and various data generated during data acquisition and processing), etc. The functions of the foregoing components are similar to those in the prior art, and the details are not described herein. It should be noted that the medical image processing device 1000 does not necessarily include all of the components shown in FIG. 10. In addition, the medical image processing device 1000 may further include components not shown in FIG. 10, for which reference may be made to the related art.

The processor 1010 may communicate with a medical device, a display, or the like in response to an operation of the input device, and may also control an input action and/or a status of the input device. The processor 1010 may also be referred to as a microcontroller unit (MCU), microprocessor or microcontroller, or another processor apparatus and/or logic apparatus. The processor 1010 may include a reset circuit, a clock circuit, a chip, a microcontroller, etc. The functions of the processor 1010 may be integrated on a motherboard (e.g., the processor 1010 is configured as a chip connected to a motherboard processor (CPU)) of the medical device, or may be configured independently of the motherboard, and the embodiments of the present application are not limited thereto.

Further provided in an embodiment of the present application is a medical device. The medical device includes the medical image processing device 1000 described in the foregoing embodiments. The implementation of the medical image processing device 1000 is as described above, and the details are not described herein again.

In some embodiments, the medical device includes an electronic computed tomography device, but the present application is not limited thereto, and the medical device may also be another device that may acquire medical imaging.

The functions of the processor of the medical image processing device 1000 may be integrated into a motherboard (e.g., the processor is configured as a chip connected to a motherboard processor (CPU)) of the medical device, or may be configured independently of the motherboard, and the embodiments of the present application are not limited thereto.

In some embodiments, the medical device may further include other components. For details, reference may be made to the related art, and the details will not be described herein.

An exemplary description is given below by using a CT device as an example of the medical device. FIG. 11 is a schematic diagram of a CT system 10 according to an embodiment of the present application. As shown in FIG. 11, the system 10 includes a gantry 12. An X-ray source 14 and a detector 18 are disposed opposite to each other on the gantry 12. The detector 18 is composed of a plurality of detector modules 20 and a data acquisition system (DAS) 26. The DAS 26 is configured to convert sampled analog data of analog attenuation data received by the plurality of detector modules 20 into digital signals for subsequent processing.

In some embodiments, the system 10 is used for acquiring, from different angles, projection data of a subject to be examined. Thus, components on the gantry 12 are used for rotating around a center of rotation 24 to acquire projection data. During rotation, the X-ray radiation source 14 is used to emit toward the detector 18 X-rays 16 that penetrate the subject to be examined. Attenuated X-ray beam data is preprocessed and then used as projection data of a target volume of the subject. An image of the subject to be examined may be reconstructed on the basis of the projection data. The reconstructed image may display internal features of the subject to be examined. These features include, for example, a lesion, the size, the shape, etc., of a body tissue structure. The center of rotation 24 of the gantry also defines the center of a scanning field 80.

The system 10 further includes an image reconstruction module 50. As described above, the DAS 26 samples and digitizes the projection data acquired by the plurality of detector modules 20. Next, the image reconstruction module 50 performs high-speed image reconstruction on the basis of the aforementioned sampled and digitized projection data. In some embodiments, the image reconstruction module 50 stores the reconstructed image in a storage device or a mass memory 46. Or, the image reconstruction module 50 transmits the reconstructed image to a computer 40 to generate information for diagnosing and evaluating patients.

Although the image reconstruction module 50 is illustrated as a separate entity in FIG. 25, in some embodiments, the image reconstruction module 50 may form a part of the computer 40. Or, the image reconstruction module 50 may not exist in the system 10, or the computer 40 may perform one or more functions of the image reconstruction module 50. Furthermore, the image reconstruction module 50 may be located at a local or remote location, and may be connected to the system 10 using a wired or wireless network. In some embodiments, computing resources having a centralized cloud network may be used for the image reconstruction module 50.

In some embodiments, the system 10 includes a control mechanism 30. The control mechanism 30 may include an X-ray controller 34 used to provide power and timing signals to the X-ray radiation source 14. The control mechanism 30 may further include a gantry controller 32 used to control the rotational speed and/or position of the gantry 12 on the basis of imaging requirements. The control mechanism 30 may further include a carrier table controller 36 configured to drive a carrier table 28 to move to a suitable position so as to position the subject to be examined in the gantry 12, so as to acquire the projection data of the target volume of the subject to be examined. Furthermore, the carrier table 28 includes a driving apparatus, and the carrier table controller 36 may control the carrier table 28 by controlling the driving apparatus.

In some embodiments, the system 10 further includes the computer 40, where data sampled and digitized by the DAS 26 and/or an image reconstructed by the image reconstruction module 50 is transmitted to a computer or the computer 40 for processing. In some embodiments, the computer 40 stores the data and/or image in a storage device such as a mass memory 46. The mass memory 46 may include a hard disk drive, a floppy disk drive, a CD-read/write (CD-R/W) drive, a digital versatile disc (DVD) drive, a flash drive, and/or a solid-state storage apparatus. In some embodiments, the computer 40 transmits the reconstructed image and/or other information to a display 42, the display 42 being communicatively connected to the computer 40 and/or the image reconstruction module 50. In some embodiments, the computer 40 may be connected to a local or remote display, printer, workstation and/or similar device, for example, connected to such devices of medical institutions or hospitals, or connected to a remote device by means of one or a plurality of configured wires or a wireless network such as the Internet and/or a virtual private network.

Furthermore, the computer 40 may provide commands and parameters to the DAS 26 and the control mechanism 30 (including the gantry controller 32, the X-ray controller 34, and the carrier table controller 36) on the basis of user provision and/or system definition, so as to control a system operation, such as data acquisition and/or processing. In some embodiments, the computer 40 controls system operation on the basis of user input. For example, the computer 40 may receive user input such as commands, scanning protocols and/or scanning parameters, by means of an operator console 48 connected thereto. The operator console 48 may include a keyboard (not shown) and/or touch screen to allow a user to input/select commands, scanning protocols and/or scanning parameters.

In some embodiments, the system 10 may include or be connected to a picture archiving and communication system (PACS) (not shown in the figure). In some embodiments, the PACS is further connected to a remote system such as a radiology information system, a hospital information system, and/or an internal or external network (not shown) to allow operators at different locations to provide commands and parameters and/or access image data.

The method or process described in the aforementioned embodiments may be stored as executable instructions in a non-volatile memory in a computing device of the system 10. For example, the computer 40 may include executable instructions in the non-volatile memory and may apply the medical image processing method in the embodiments of the present application.

The computer 40 may be configured and/or arranged for use in different manners. For example, in some implementations, a single computer 40 may be used; and in other implementations, a plurality of computers 40 are configured to work together (for example, on the basis of distributed processing configuration) or separately, and each computer 40 is configured to process specific aspects and/or functions, and/or process data for generating models used only for a specific system 10. In some implementations, the computer 40 may be local (for example, in the same place as one or a plurality of systems 10, for example, in the same facility and/or the same local network); and in other implementations, the computer 40 may be remote and thus only accessible by means of a remote connection (for example, by means of the Internet or other available remote access technologies). In a specific implementation, the computer 40 may be configured in a manner similar to that of cloud technology, and may be accessed and/or used in a manner substantially similar to that of accessing and using other cloud-based systems.

Once data is generated and/or configured, the data can be replicated and/or loaded into the medical system 10, which may be accomplished in different manners. For example, models may be loaded by means of a directional connection or link between the system 10 and the computer 40. In this regard, communication between different elements may be accomplished using an available wired and/or wireless connection and/or according to any suitable communication (and/or network) standard or protocol. Alternatively or additionally, the data may be indirectly loaded into the system 10. For example, the data may be stored in a suitable machine-readable medium (for example, a flash memory card), and then the medium is used to load the data into the system 10 (for example, by a user or an authorized personnel of the system on site); or the data may be downloaded to an electronic device (for example, a laptop) capable of local communication, and then the device is used on site (for example, by a user or an authorized personnel of the system) to upload the data to the system 10 by means of a direct connection (for example, a USB connector).

Further provided in an embodiment of the present application is a computer-readable program, wherein when the program is executed, the program causes a computer to perform the medical image processing method described in the foregoing embodiments in an apparatus or a medical device.

Further provided in an embodiment of the present application is a storage medium having a computer-readable program stored therein, wherein the computer-readable program causes a computer to perform the medical image processing method described in the foregoing embodiments in an apparatus or a medical device.

The above embodiments merely provide illustrative descriptions of the embodiments of the present application. However, the present application is not limited thereto, and appropriate variations may be made on the basis of the above embodiments. For example, each of the above embodiments may be used independently, or one or more among the above embodiments may be combined.

The present application is described above with reference to specific implementations. However, it should be clear to those skilled in the art that the foregoing description is merely illustrative and is not intended to limit the scope of protection of the present application.

## Claims

1. A medical image processing method, **characterized by** comprising:
acquiring (201) raw projection data obtained after a subject to be examined is scanned, and performing reconstruction to obtain a raw medical image;
performing (202) multivalued processing on the raw medical image to obtain a multivalued image;
according to a correspondence between a degree of contribution, relating to a ray absorption amount, of each tissue on a ray path that does not pass through a specific material site in the multivalued image and a raw projection value corresponding to the ray path in the raw projection data, determining (203) a predicted projection value of a path corresponding to the specific material site in the raw projection data, wherein the step of determining a predicted projection value comprises:
determining the degree of contribution of each tissue, other than the specific material site, through which second ray paths pass in the multivalued image, wherein the second ray paths are ray paths that pass through the specific material site; and
determining, according to the correspondence, a projection value corresponding to the degree of contribution of each tissue, other than the specific material site, on the second ray paths as the predicted projection value; and
obtaining (204) a first medical image according to the predicted projection value and the raw projection data, wherein artifacts of the specific material site are reduced in the first medical image.

2. The method according to claim 1, wherein the performing (202) multivalued processing on the raw medical image to obtain a multivalued image comprises: comparing CT values of pixel positions in the raw medical image with a plurality of thresholds corresponding to CT values of different types of tissues, and according to comparison results, redetermining pixel values of the pixel positions to obtain the multivalued image, wherein in the multivalued image, pixel values corresponding to different tissues are different, and pixel values corresponding to the same tissue are the same.

3. The method according to claim 1, wherein the method further comprises: determining the correspondence, comprising:
determining (601) the degree of contribution of each tissue through which a plurality of different first ray paths pass in the multivalued image, and raw projection values of projection positions respectively corresponding to the plurality of different first ray paths in the raw projection data, wherein the first ray paths are ray paths that do not pass through the specific material site; and
performing (602) fitting according to the degree of contribution of each tissue on the plurality of first ray paths and the plurality of raw projection values to obtain the correspondence.

4. The method according to claim 3, wherein the determining the degree of contribution of each tissue through which the first ray paths pass in the multivalued image comprises:
calculating the length or area of each tissue through which the first ray paths pass in the multivalued image, and multiplying the length or area by a contribution weighting value of the tissue to obtain the degree of contribution of the tissue, wherein the contribution weighting value reflects the degree of ray absorption of the tissue, and wherein the contribution weighting value is equal to a ray absorption coefficient of the tissue.

5. The method according to claim 4, wherein the length of each tissue through which the first ray paths pass in the multivalued image is calculated using a forward projection method.

6. The method according to claim 1, wherein the distance between each of the projection positions corresponding to a plurality of different first ray paths in the raw projection data and a projection position corresponding to each second ray path in the raw projection data is less than or equal to a preset value.

7. The method according to claim 1, wherein the obtaining (204) a first medical image according to the predicted projection value and the raw projection data comprises:
replacing a raw projection value of the path corresponding to the specific material site in the raw projection data with the predicted projection value to obtain first projection data; and
obtaining the first medical image according to the first projection data.

8. The method according to claim 7, wherein the obtaining (204) the first medical image according to the first projection data comprises:
correcting, in the first projection data, the predicted projection value by using raw projection values around the location of the predicted projection value, to obtain second projection data; and
reconstructing the second projection data to obtain the first medical image.

9. The method according to claim 1, wherein the method further comprises:
determining the position of the specific material site in the raw medical image, comprising: comparing CT values of pixels in the raw medical image with a preset CT value corresponding to the specific material; and determining the location of pixels having a CT value greater than the preset CT value as the specific material site; and
performing forward projection on the position of the specific material site in the raw medical image to determine the path corresponding to the specific material site in the raw projection data.

10. The method according to claim 1, further comprising:
reconstructing (205) a second medical image having the specific material site; and
filling (206) the second medical image into the first medical image to generate a diagnostic image.

11. The method according to claim 10, wherein the raw medical image is an image reconstructed within a first predetermined field of view, the first predetermined field of view is an extended field of view, the first medical image is an image reconstructed within a second predetermined field of view, the second medical image is an image reconstructed within a third predetermined field of view, and the second predetermined field of view is smaller than or equal to the first predetermined field of view.

12. The method according to claim 10 or 11, further comprising:
scaling the specific material site in the second medical image according to a scaling factor; and
filling a scaled image of the specific material site into a corresponding position on the first medical image to obtain the diagnostic image, wherein the scaling factor is related to the sizes of the second predetermined field of view and the third predetermined field of view.

13. The method according to claim 2 or 4, wherein in the multivalued image, a pixel value corresponding to the specific material site is set to 0, or a contribution weighting value corresponding to the specific material site is 0.

14. A medical image processing apparatus (900; 1000), **characterized by** comprising:
a first reconstruction unit (901), the first reconstruction unit (901) configured for acquiring raw projection data obtained after a subject to be examined is scanned, and performing reconstruction to obtain a raw medical image;
a segmentation unit (902), the segmentation unit (902) configured for performing multivalued processing on the raw medical image to obtain a multivalued image;
a first determination unit (903), the first determination unit (903) configured for determining, according to a correspondence between a degree of contribution, relating to a ray absorption amount, of each tissue on a ray path that does not pass through a specific material site in the multivalued image and a raw projection value corresponding to the ray path in the raw projection data, a predicted projection value of a path corresponding to the specific material site in the raw projection data, wherein the first determination unit (903) is configured for:
determining the degree of contribution of each tissue, other than the specific material site, through which second ray paths pass in the multivalued image, wherein the second ray paths are ray paths that pass through the specific material site, and
determining, according to the correspondence, a projection value corresponding to the degree of contribution of each tissue, other than the specific material site, on the second ray paths as the predicted projection value; and
a second reconstruction unit (904), the second reconstruction unit (904) configured for obtaining a first medical image according to the predicted projection value and the raw projection data, wherein artifacts of the specific material site are reduced in the first medical image.

## Patentansprüche

1. Verfahren zur medizinischen Bildverarbeitung, **dadurch gekennzeichnet, dass** es umfasst:
ein Erfassen (201) von Rohdaten aus der Projektion, die erhalten worden sind, nachdem eine Person, die untersucht werden soll, gescannt worden ist, und Durchführen einer Rekonstruktion, um ein rohes medizinisches Bild zu erhalten;
ein Durchführen (202) einer mehrwertigen Verarbeitung des medizinischen Rohbildes, um ein mehrwertiges Bild zu erhalten;
entsprechend einer Beziehung zwischen einem Ausmaß eines Beitrags, der sich auf eine Menge einer Strahlungsabsorption eines jeden Gewebes auf einem Strahlenweg, der nicht durch eine spezifische lokale Materialstelle in dem mehrwertigen Bild verläuft, bezieht, und einem Rohwert der Projektion, der dem Strahlenweg von den Rohdaten aus der Projektion entspricht, ein Bestimmen (203) eines vorhergesagten Projektionswerts eines Weges, der der spezifischen lokalen Materialstelle in den Rohdaten aus der Projektion entspricht, wobei der Schritt des Bestimmen eines vorhergesagten Projektionswerts umfasst:
Bestimmen des Ausmaßes eines Beitrags eines jeden Gewebes, das allerdings ein anderes als das an der spezifischen lokalen Materialstelle ist und durch das zweite Strahlenwege in das mehrwertige Bild verlaufen, wobei die zweiten Strahlenwege Strahlenwege sind, die durch die spezifische lokale Materialstelle verlaufen; und
entsprechend der Beziehung ein Bestimmen eines Projektionswerts, der dem Ausmaß eines Beitrags eines jeden Gewebes, das allerdings ein anderes als das an der spezifischen lokalen Materialstelle ist, entspricht, auf den zweiten Strahlenwegen als den vorhergesagten Projektionswert; und
Erhalten (204) eines ersten medizinischen Bildes entsprechend dem vorhergesagten Projektionswert und den Rohdaten aus der Projektion, wobei Artefakte der spezifischen lokalen Materialstelle in dem ersten medizinischen Bild verringert werden.

2. Verfahren nach Anspruch 1, wobei das Durchführen (202) einer mehrwertigen Verarbeitung auf dem rohen medizinischen Bild, um ein mehrwertiges Bild zu erhalten, Folgendes umfasst: Vergleichen von CT-Werten von Pixel-Positionen in dem rohen medizinischen Bild mit mehreren Schwellenwerten, die den CT-Werten von unterschiedlichen Gewebetypen entsprechen, und entsprechend den Vergleichsergebnissen ein erneutes Bestimmen der Pixel-Werte der Pixel-Positionen, um das mehrwertiges Bild zu erhalten, wobei in dem mehrwertigen Bild Pixel-Werte, die den unterschiedlichen Gewebetypen entsprechen, unterschiedlich sind, und wobei Pixel-Werte, die demselben Gewebe entsprechen, dieselben sind.

3. Verfahren nach Anspruch 1, wobei das Verfahren ferner umfasst: ein Bestimmen der Beziehung, wobei dieses Bestimmen umfasst:
Bestimmen (601) des Ausmaßes eines Beitrags eines jeden Gewebes, durch welches mehrere unterschiedliche erste Strahlenwege in das mehrwertige Bild verlaufen, und ein Bestimmen von Rohdaten aus der Projektion von Projektionspositionen bzw. entsprechend den mehreren unterschiedlichen ersten Strahlenwegen in den Rohdaten aus der Projektion, wobei die ersten Strahlenwege Strahlenwege sind, die nicht durch die spezifische lokale Materialstelle verlaufen; und
Durchführen (602) einer Anpassung entsprechend dem Ausmaß eines Beitrags eines jeden Gewebes auf die mehreren ersten Strahlenwege und auf die mehreren rohen Projektionswerte, um die Beziehung zu erhalten.

4. Verfahren nach Anspruch 3, wobei das Bestimmen des Ausmaßes eines Beitrags eines jeden Gewebes, durch welches die ersten Strahlenwege in das mehrwertige Bild verlaufen, umfasst:
Berechnen der Länge oder Fläche eines jeden Gewebes, durch welches die ersten Strahlenwege in das mehrwertige Bild verlaufen, und Vervielfachen der Länge oder Fläche um einen Zuteilungsfaktor eines Gewichtswerts des Gewebes, um das Ausmaß eines Beitrags des Gewebes zu erhalten, wobei der Zuteilungsfaktor des Gewichtswerts das Ausmaß einer Strahlenabsorption des Gewebes widerspiegelt, und wobei der Zuteilungsfaktor des Gewichtswerts gleich einem Strahlungsabsorptionskoeffizienten des Gewebes ist.

5. Verfahren nach Anspruch 4, wobei die Länge eines jeden Gewebes, durch welches die ersten Strahlenwege in das mehrwertige Bild verlaufen, unter Verwendung eines Vorwärtsprojektionsverfahrens berechnet wird.

6. Verfahren nach Anspruch 1, wobei der Abstand zwischen jeder der Projektionspositionen, die den mehreren unterschiedlichen ersten Strahlenwegen in den Rohdaten aus der Projektion entsprechen, und einer Projektionsposition, die einem jeden zweiten Strahlenweg in den Rohdaten aus der Projektion entspricht, gleich oder kleiner als ein vorgegebener Wert ist.

7. Verfahren nach Anspruch 1, wobei das Erhalten (204) eines ersten medizinischen Bildes entsprechend dem vorhergesagten Projektionswert und den Rohdaten aus der Projektion umfasst:
Ersetzen eines rohen Projektionswerts des Weges, der der spezifischen lokalen Materialstelle in den Rohdaten aus der Projektion entspricht, durch den vorhergesagten Projektionswert, um erste Projektionsdaten zu erhalten; und
Erhalten des ersten medizinischen Bildes entsprechend den ersten Projektionsdaten.

8. Verfahren nach Anspruch 7, wobei das Erhalten (204) des ersten medizinischen Bildes entsprechend den ersten Projektionsdaten umfasst:
in den ersten Projektionsdaten ein Korrigieren des vorhergesagten Projektionswerts, indem rohe Projektionswerte um den Ort des vorhergesagten Projektionswerts herum verwendet werden, um zweite Projektionsdaten zu erhalten; und
Rekonstruieren der zweiten Projektionsdaten, um das erste medizinische Bild zu erhalten.

9. Verfahren nach Anspruch 1, wobei das Verfahren ferner umfasst:
Bestimmen der Position der spezifischen lokalen Materialstelle in dem rohen medizinischen Bild, wobei das Bestimmen umfasst: ein Vergleichen von CT-Werten von Pixeln in dem rohen medizinischen Bild mit einem voreingestellten CT-Wert, der dem spezifischen Material entspricht; und ein Bestimmen des Ortes der Pixel, die einen CT-Wert aufweisen, der größer als der voreingestellte CT-Wert an der spezifischen lokalen Materialstelle ist; und
ein Durchführen eines Vorwärtsprojektionsverfahrens auf der Position der spezifischen lokalen Materialstelle in dem rohen medizinischen Bild, um den Weg, der der spezifischen lokalen Materialstelle in den Rohdaten aus der Projektion entspricht, zu bestimmen.

10. Verfahren nach Anspruch 1, das ferner umfasst:
ein Rekonstruieren (205) eines zweiten medizinische Bildes, das die spezifische lokale Materialstelle aufweist; und
ein Einfügen (206) des zweiten medizinischen Bildes in das erste medizinische Bild, um ein diagnostisches Bild zu erzeugen.

11. Verfahren nach Anspruch 10, wobei das rohe medizinische Bild ein Bild ist, das innerhalb eines ersten vorgegebenen Sichtfeldes rekonstruiert worden ist, wobei das erste vorgegebene Sichtfeld ein ausgedehntes Sichtfeld ist, wobei das erste medizinische Bild ein Bild ist, das innerhalb eines zweiten vorgegebenen Sichtfeldes rekonstruiert worden ist, wobei das zweite medizinische Bild ein Bild ist, das innerhalb eines dritten vorgegebenen Sichtfeldes rekonstruiert worden ist, und wobei das zweite vorgegebene Sichtfeld gleich oder kleiner als das erste vorgegebene Sichtfeld ist.

12. Verfahren nach Anspruch 10 oder 11, das ferner umfasst:
ein Skalieren der spezifischen lokalen Materialstelle in dem zweiten medizinischen Bild entsprechend einem Skalierungsfaktor; und
ein Einfügen eines skalierten Bildes der spezifischen lokalen Materialstelle in eine entsprechende Position auf dem ersten medizinischen Bild, um das diagnostische Bild zu erhalten, wobei der Skalierungsfaktor auf die Größen des zweiten vorgegebenen Sichtfeldes und des dritten vorgegebenen Sichtfeldes bezogen ist.

13. Verfahren nach Anspruch 2 oder 4, wobei in dem mehrwertigen Bild ein Pixelwert, der der spezifischen lokalen Materialstelle entspricht, auf 0 gesetzt ist, oder wobei ein Zuteilungsfaktor eines Gewichtswerts, der der spezifischen lokalen Materialstelle entspricht, 0 ist.

14. Medizinische Bildverarbeitungsvorrichtung (900, 1000), **dadurch gekennzeichnet, dass** sie umfasst:
eine erste Rekonstruktionseinheit (901), wobei die erste Rekonstruktionseinheit (901) konfiguriert ist , um Rohdaten aus der Projektion zu erfassen, die erhalten worden sind, nachdem eine Person, die untersucht werden soll, gescannt worden ist, und um einer Rekonstruktion durchzuführen, um ein rohes medizinisches Bild zu erhalten;
eine Segmentationseinheit (902), wobei die Segmentationseinheit (902) konfiguriert ist, um eine mehrwertige Verarbeitung auf dem rohen medizinischen Bild durchzuführen, um ein mehrwertiges Bild zu erhalten;
eine erste Bestimmungseinheit (903), wobei die erste Bestimmungseinheit (903) konfiguriert ist, um entsprechend einer Beziehung zwischen einem Ausmaß eines Beitrags, der sich auf eine Menge einer Strahlungsabsorption eines jeden Gewebes auf einem Strahlenweg, der nicht durch eine spezifische lokale Materialstelle in dem mehrwertigen Bild verläuft, bezieht, und einem Rohwert der Projektion, der dem Strahlenweg von den Rohdaten aus der Projektion entspricht, einen vorhergesagten Projektionswert eines Weges, der der spezifischen lokalen Materialstelle von den Rohdaten aus der Projektion entspricht, zu bestimmen, wobei die erste Bestimmungseinheit (903) konfiguriert ist, um:
das Ausmaß eines Beitrags eines jeden Gewebes, das allerdings ein anderes als das an der spezifischen lokalen Materialstelle ist und durch das zweite Strahlenwege in das mehrwertige Bild verlaufen, zu bestimmen, wobei die zweiten Strahlenwege Strahlenwege sind, die durch die spezifische lokale Materialstelle verlaufen, und
entsprechend der Beziehung einen Projektionswert, der dem Ausmaß eines Beitrags eines jeden Gewebes entspricht, das allerdings ein anderes als das an der spezifischen lokalen Materialstelle ist, auf den zweiten Strahlenwegen als den vorhergesagten Projektionswert zu bestimmen; und
eine zweite Rekonstruktionseinheit (904), wobei die zweite Rekonstruktionseinheit (904) konfiguriert ist , um ein erstes medizinisches Bild entsprechend dem vorhergesagten Projektionswert und die Rohdaten aus der Projektion zu erhalten, wobei Artefakte der spezifischen lokalen Materialstelle in dem ersten medizinischen Bild verringert werden.

## Revendications

1. Procédé de traitement d'images médicales, **caractérisé en ce qu'**il comprend les étapes consistant à :
acquérir (201) des données de projection brutes obtenues après qu'un sujet à examiner a été scanné, et effectuer une reconstruction pour obtenir une image médicale brute ;
effectuer (202) un traitement à valeurs multiples sur l'image médicale brute afin d'obtenir une image à valeurs multiples ;
en fonction d'une correspondance entre un degré de contribution relatif à une quantité d'absorption de rayons de chaque tissu sur un parcours de rayons qui ne traverse pas un site matériel spécifique dans l'image à valeurs multiples et d'une valeur de projection brute correspondant au parcours de rayons dans les données de projection brute, déterminer (203) une valeur de projection prédite d'un parcours correspondant au site matériel spécifique dans les données de projection brutes, l'étape de détermination d'une valeur de projection prédite comprenant :
la détermination du degré de contribution de chaque tissu, autre que le site spécifique du matériau, à travers lequel passent les seconds parcours de rayons dans l'image à valeurs multiples, les seconds parcours de rayons étant des parcours de rayons qui passent à travers le site spécifique du matériau ; et
la détermination, en fonction de la correspondance, d'une valeur de projection correspondant au degré de contribution de chaque tissu, autre que le site matériel spécifique, sur les seconds parcours de rayons comme valeur de projection prédite ; et
obtenir (204) une première image médicale en fonction de la valeur de projection prédite et des données de projection brutes, les artefacts du site matériel spécifique étant réduits dans la première image médicale.

2. Procédé selon la revendication 1, dans lequel l'exécution (202) d'un traitement à valeurs multiples sur l'image médicale brute pour obtenir une image à valeurs multiples comprend l'étape consistant à : comparer les valeurs CT de positions de pixels dans l'image médicale brute avec une pluralité de seuils correspondant à des valeurs CT de différents types de tissus et, en fonction des résultats de comparaison, redéterminer es valeurs de pixels des positions de pixels pour obtenir l'image à valeurs multiples, les valeurs de pixels correspondant à différents tissus étant différentes dans l'image à valeurs multiples, et les valeurs de pixels correspondant au même tissu étant identiques.

3. Procédé selon la revendication 1, le procédé comprenant en outre l'étape consistant à : déterminer la correspondance, comprenant :
la détermination (601) du degré de contribution de chaque tissu à travers lequel passent une pluralité de premiers parcours de rayons différents dans l'image à valeurs multiples, et des valeurs de projection brutes de positions de projection correspondant respectivement à la pluralité de premiers parcours de rayons différents dans les données de projection brutes, les premiers parcours de rayons étant des parcours de rayons ne passant pas par le site matériel spécifique ; et
la réalisation (602) d'un ajustement en fonction du degré de contribution de chaque tissu sur la pluralité de premiers parcours de rayons et la pluralité de valeurs de projection brutes pour obtenir la correspondance.

4. Procédé selon la revendication 3, dans lequel la détermination du degré de contribution de chaque tissu à travers lequel passent les premiers parcours de rayons dans l'image à valeurs multiples comprend l'étape consistant à :
calculer la longueur ou la surface de chaque tissu à travers lequel passent les premiers parcours de rayons dans l'image à valeurs multiples, et multiplier la longueur ou la surface par une valeur de pondération de contribution du tissu pour obtenir le degré de contribution du tissu, la valeur de pondération de contribution reflétant le degré d'absorption de rayons du tissu, et la valeur de pondération de contribution étant égale à un coefficient d'absorption de rayonnement du tissu.

5. Procédé selon la revendication 4, dans lequel la longueur de chaque tissu à travers lequel passent les premiers parcours de rayons dans l'image à valeurs multiples est calculée en utilisant un procédé de projection vers l'avant.

6. Procédé selon la revendication 1, dans lequel la distance entre chacune des positions de projection correspondant à une pluralité de premiers parcours de rayons différents dans les données de projection brutes et à une position de projection correspondant à chaque second parcours de rayons dans les données de projection brutes est inférieure ou égale à une valeur préétablie.

7. Procédé selon la revendication 1, dans lequel l'obtention (204) d'une première image médicale en fonction de la valeur de projection prédite et les données de projection brutes comprend les étapes consistant à :
remplacer une valeur de projection brute du parcours correspondant au site matériel spécifique dans les données de projection brutes par la valeur de projection prédite pour obtenir des premières données de projection ; et
obtenir la première image médicale en fonction des premières données de projection.

8. Procédé selon la revendication 7, dans lequel l'obtention (204) de la première image médicale en fonction des premières données de projection comprend les étapes consistant à :
corriger, dans les premières données de projection, la valeur de projection prédite en utilisant des valeurs de projection brutes autour de l'emplacement de la valeur de projection prédite, afin d'obtenir des secondes données de projection ; et
reconstruire des secondes données de projection pour obtenir la première image médicale.

9. Procédé selon la revendication 1, le procédé comprenant en outre :
la détermination de la position du site matériel spécifique dans l'image médicale brute, comprenant l'étape consistant à : comparer les valeurs CT de pixels dans l'image médicale brute avec une valeur CT prédéfinie correspondant au matériau spécifique ; et déterminer l'emplacement de pixels ayant une valeur CT supérieure à la valeur CT prédéfinie en tant que site matériel spécifique ; et
réaliser une projejction vers l'avant de la position du site matériel spécifique dans l'image médicale brute pour déterminer le parcours correspondant au site matériel spécifique dans les données de projection brutes.

10. Procédé selon la revendication 1, comprenant en outre les étapes consistant à :
reconstruire (205) une seconde image médicale ayant le site matériel spécifique ; et
remplir (206) la seconde image médicale dans la première image médicale pour générer une image de diagnostic.

11. Procédé selon la revendication 10, dans lequel l'image médicale brute est une image reconstruite à l'intérieur d'un premier champ de vision prédéterminé, le premier champ de vision prédéterminé étant un champ de vision étendu, la première image médicale étant une image reconstruite à l'intérieur d'un deuxième champ de vision prédéterminé, la seconde image médicale étant une image reconstruite à l'intérieur d'un troisième champ de vision prédéterminé, et le deuxième champ de vision prédéterminé est inférieur ou égal au premier champ de vision prédéterminé.

12. Procédé selon la revendication 10 ou 11, comprenant en outre les étapes consistant à :
mettre à l'échelle le site matériel spécifique dans la seconde image médicale selon un facteur de mise à l'échelle ; et
remplir une image mise à l'échelle du site matériel spécifique dans une position correspondante sur la première image médicale afin d'obtenir l'image de diagnostic, le facteur de mise à l'échelle étant lié aux dimensions du deuxième champ de vision prédéterminé et du troisième champ de vision prédéterminé.

13. Procédé selon la revendication 2 ou 4, dans lequel, dans l'image à valeurs multiples, une valeur de pixel correspondant au site matériel spécifique est fixée à 0, ou une valeur de pondération de contribution correspondant au site matériel spécifique est égale à 0.

14. Appareil de traitement d'images médicales (900 ; 1000), **caractérisé en ce qu'**il comprend :
une première unité de reconstruction (901), la première unité de reconstruction (901) étant configurée pour acquérir des données de projection brutes obtenues après qu'un sujet à examiner a été scanné, et pour effectuer une reconstruction afin d'obtenir une image médicale brute ;
une unité de segmentation (902), l'unité de segmentation (902) étant configurée pour effectuer un traitement à valeurs multiples sur l'image médicale brute afin d'obtenir une image à valeurs multiples ;
une première unité de détermination (903), la première unité de détermination (903) étant configurée pour déterminer, en fonction d'une correspondance entre un degré de contribution, relatif à une quantité d'absorption de rayons, de chaque tissu sur un parcours de rayons qui ne traverse pas un site matériel spécifique dans l'image à valeurs multiples et une valeur de projection brute correspondant au parcours de rayons dans les données de projection brutes, une valeur de projection prédite d'un parcours correspondant au site matériel spécifique dans les données de projection brutes, la première unité de détermination (903) étant configurée pour :
déterminer le degré de contribution de chaque tissu, autre que le site spécifique du matériau, à travers lequel passent les seconds parcours de rayons dans l'image à valeurs multiples, les seconds parcours de rayons étant des parcours de rayons qui passent à travers le site matériel spécifique, et
déterminer, en fonction de la correspondance, une valeur de projection correspondant au degré de contribution de chaque tissu, autre que le site matériel spécifique, sur les seconds parcours de rayons comme valeur de projection prédite ; et
une seconde unité de reconstruction (904), la seconde unité de reconstruction (904) étant configurée pour obtenir une première image médicale en fonction de la valeur de projection prédite et des données de projection brutes, les artefacts du site matériel spécifique étant réduits dans la première image médicale.
